# FASCICULE DE BREVET EUROPEEN

(11) **EP 0 765 197 B1**
(45) Date de publication et mention de la délivrance du brevet: **06.05.1999**
(21) Numéro de dépôt: 95923368.5
(22) Date de dépôt: 12.06.1995
(51) Int. Cl.: B21J 15/32, B23P 19/00

(54) **DISPOSITIF DE DISTRIBUTION DE PIECES A L'UNITE ET DISPOSITIF DE STOCKAGE DE CES PIECES**
VORRICHTUNG ZUM EINZELFÖRDERN VON WERKSTÜCKEN UND VORRATSBEHÄLTER FÜR WERKSTÜCKE
DEVICE FOR DISPENSING SINGLE COMPONENTS AND DEVICE FOR STORING SAID COMPONENTS

(30) Priorité: 13.06.1994 FR 9407288
(43) Date de publication de la demande: 02.04.1997
(60) Demande divisionnaire: 98201090.2
(73) Titulaire: STE ATELIERS DE LA HAUTE-GARONNE - ETS AURIOL ET CIE, F-31130 Balma (FR); DASSAULT AVIATION, F-92420 Vaucresson (FR); Auriol, Jean-Marc, F-31130 Balma (FR); Bornes, Philippe, F-31130 Balma (FR)
(72) Inventeur: AURIOL, Jean-Marc, 31130 Balma (FR); BORNES, Philippe, 31130 Balma (FR); GUERIN, Sylvain, 59113 Seclin (FR)
(74) Mandataire: Cabinet BARRE LAFORGUE & associés
(86) Numéro de dépôt international: FR9500764
(87) Numéro de publication internationale: WO9534391

(56) Documents cités:
- EP-A- 0 567 240
- EP-A- 0 618 022
- WO-A-91/18695

## Description

La présente invention concerne un dispositif de distribution de pièces à l'unité (voir par example EP-A-0 567 240).

Plus particulièrement, les pièces en question sont des rivets destinés à alimenter de manière continue et homogène une machine à riveter.

Il est bien connu que pour assurer un rivetage homogène, ce qui est impératif (notamment dans le domaine de l'aéronautique), il est nécessaire d'alimenter une machine à riveter de la manière la plus uniforme possible. Chaque rivet doit arriver au poste de rivetage dans le bon sens, et un par un. Or, une machine à riveter peut être alimentée par plusieurs types de rivets différents, en longueurs, diamètres et formes de tête. Il convient donc de constituer des dispositifs de stockage distincts contenant chacun un type de rivet déterminé. Ensuite, il convient de mettre en oeuvre un dispositif de sélection d'un type de rivet déterminé, et un moyen de distribution de ce rivet à l'unité, vers une machine à riveter.

A ce jour, cependant, il n'existe pas de dispositif de distribution de rivets à l'unité capable de délivrer, toujours dans une même position, des rivets de tailles et formes différentes, en les guidant correctement tout au long de leur trajet.

Le but de la présente invention est de palier l'ensemble de ces inconvénients et notamment de créer un dispositif de distribution de pièces à l'unité permettant de délivrer, toujours dans une même position, des pièces de tailles et de formes différentes. Un tel dispositif doit être simple, peu onéreux, facile à mettre en oeuvre et à fabriquer.

A cet effet, la présente invention concerne un dispositif de distribution de pièces à l'unité, notamment de rivets, caractérisé en ce qu'il comporte :
- un moyen élastique déformable présentant à l'état passif une forme sensiblement tubulaire comportant un alésage central de section réduite, et des ouvertures d'introduction et de sortie, ledit moyen élastique étant adapté, à l'état actif pour s'expanser radialement afin de recevoir et guider dans son alésage central une pièce et,
- une source de pression adaptée pour soumettre à une surpression l'alésage interne du moyen élastique et provoquer une expansion radiale de celui-ci pour déplacer une par une chaque pièce placée au niveau de l'orifice d'introduction vers l'orifice de sortie du moyen élastique.

Ainsi, l'invention consiste à utiliser en tant que dispositif de distribution, un moyen élastique déformable, par exemple une gaine en matière extensible (du type ballon de baudruche), pour distribuer une par une des pièces amenées à l'entrée de ce dispositif de distribution, et les entraîner vers la sortie (c'est-à-dire vers une machine à riveter) par l'action d'une source de pression (par exemple de l'air comprimé).

De manière avantageuse, pour éviter que le moyen élastique éclate ou se déforme de manière irréversible, on place ce moyen élastique à l'intérieur d'un tube présentant une certaine rigidité radiale de manière à limiter l'expansion radiale du moyen élastique. Ce tube peut par contre présenter une certaine souplesse dans le sens longitudinal.

Avantageusement, le dispositif de distribution de pièces à l'unité selon la présente invention comporte un moyen de stockage de pièces. Ce moyen de stockage est adapté pour contenir une pluralité de pièces et pour les délivrer, une par une, sur commande, vers le moyen élastique.

Le moyen de stockage selon l'invention est constitué par un ensemble d'éléments tubulaires, dans lequel les pièces à stocker sont empilées les unes derrière les autres. Un moyen de retenue permet de libérer la première de ces pièces, sur commande, tout en maintenant l'ensemble des autres pièces.

Lorsque plusieurs moyens de stockage, contenant chacun des pièces différentes sont associés, le dispositif de distribution selon l'invention comporte, en outre, un moyen de sélection adapté pour recueillir une pièce en provenance de n'importe quel moyen de stockage en vue de l'amener vers l'orifice d'introduction du moyen élastique.

D'autres objets, buts et caractéristiques de la présente invention ressortiront mieux de la description qui suit, à titre d'information, en regard des dessins annexés dans lesquels :
- la figure 1 est une vue schématique en coupe longitudinale d'un moyen élastique selon l'invention,
- la figure 2 est une vue schématique en coupe longitudinale du moyen élastique de la figure 1 placé à l'intérieur d'un élément tubulaire,
- la figure 3 est une vue semblable à la figure 2 montrant le déplacement d'une pièce à l'intérieur du moyen élastique,
- la figure 4 est une vue schématique en coupe longitudinale présentant un moyen de stockage associé au moyen élastique de la figure 2,
- les figures 5 à 7 sont des vues schématiques en coupe longitudinale du moyen de stockage montrant le fonctionnement du moyen de retenue,
- la figure 8 est une vue en perspective, avec arrachement partiel, montrant un dispositif de distribution de pièces selon l'invention comportant un moyen élastique, un moyen de sélection et une pluralité de moyens de stockage et,
- la figure 9 est une vue schématique en coupe transversale du moyen de sélection représenté à la figure 8.

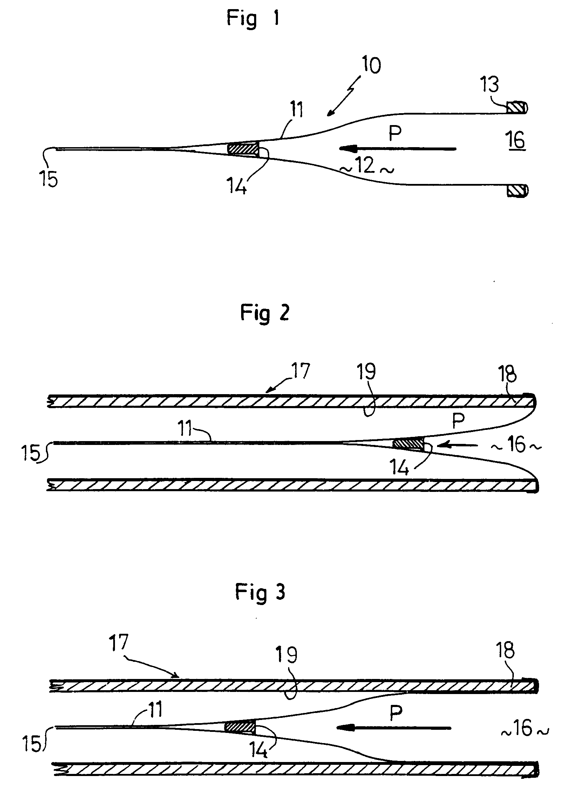

Selon le mode de réalisation représenté à la figure 1, le dispositif de distribution 10 selon l'invention comporte :
- un moyen élastique déformable 11, se présentant sous la forme d'une gaine plate extensible et,
- une source de pression (non représentée), ici de l'air comprimé, dont l'action (flèche P) s'exerce à l'intérieur du moyen élastique 11 et provoque un gonflement de l'alésage central 12 de celui-ci.

La gaine élastique 11 est repliée et fixée sur un anneau 13 solidaire d'un bâti (non représenté).

Une pièce 14, ici un rivet, se déplace a l'intérieur de la gaine 11 d'un orifice d'introduction 16 vers un orifice de sortie 15 (flèche P) sous l'action de l'air comprimé.

On remarquera que, sous l'action de la pression exercée, la gaine 11 s'expanse radialement et permet ainsi au rivet 14, également soumis à la source de pression (s'exerçant sur sa tête), d'avancer dans la gaine. Le rivet 14 forme ainsi, en quelque sorte, un bouchon refermant la gaine et empêchant l'air sous pression de s'échapper directement vers l'orifice de sortie 15 de cette gaine.

De ce fait, le rivet 14 est poussé progressivement et uniformément vers l'orifice de sortie 15. On conçoit facilement que grâce à l'expansion radiale de la gaine, celle-ci peut recevoir des rivets de tailles et formes différentes. En outre, comme la gaine enserre le rivet et ne s'expanse qu'à partir de la tête de celui-ci, les rivets sont guidés et maintenus tout au long de leur trajet à l'intérieur de la gaine.

En variante, pour éviter que la gaine éclate ou qu'elle se déforme de manière irréversible, on la place à l'intérieur d'un élément tubulaire 17 (figures 2 et 3) présentant un alésage longitudinal 19. Cet élément tubulaire présente une certaine rigidité radiale et une souplesse longitudinale.

Dans ce cas, l'orifice d'introduction 16 de la gaine est retourné et fixé (par collage par exemple) sur l'extrémité 18 de l'élément tubulaire lui-même. Le principe d'avancement du rivet 14 à l'intérieur de la gaine élastique 11 reste le même. Cependant, comme on le remarquera mieux à la figure 3, l'expansion radiale de la gaine 11 est limitée par la présence de l'élément tubulaire 17.

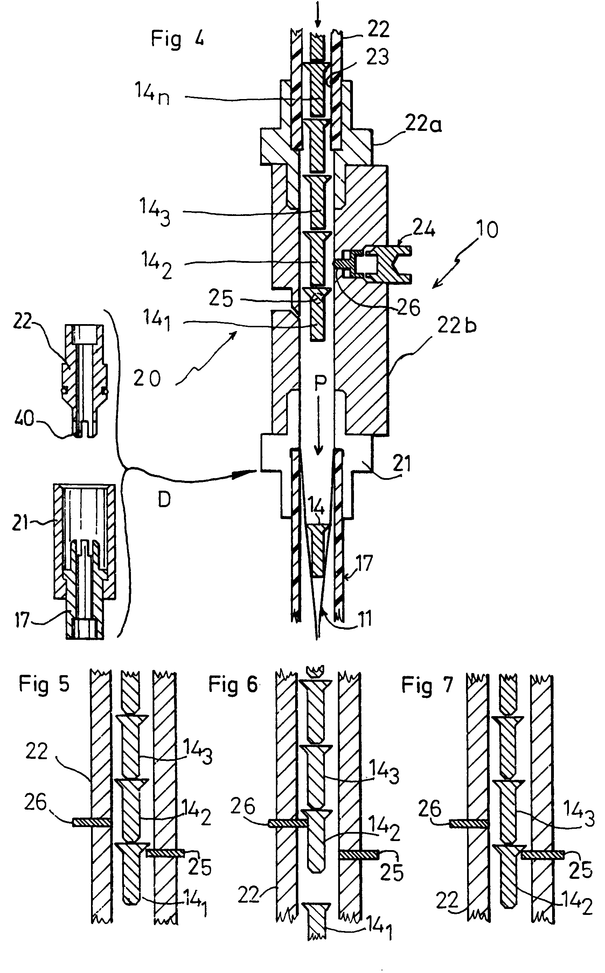

Comme le montre la figure 4, un tel dispositif de distribution peut comporter, en outre, un dispositif de stockage 20. Ce dispositif de stockage est relié au moyen élastique par un moyen de liaison 21 de type connu.

Le dispositif de stockage comporte un élément tubulaire creux 22 présentant un alésage central 23, raccordé à un élément de retenue 22b par un raccord classique 22a. L'ensemble de ces éléments 22, 22a et 22b présente un même alésage central 23.

A l'intérieur de cet alésage central 23, sont empilés les uns derrière les autres des rivets 14₁ à 14ₙ (n étant un entier positif supérieur à 1).

Un moyen de retenue 24 constitué par deux pistons 25 et 26 montés orthogonalement l'un par rapport à l'autre est placé dans l'élément de retenue 22b. Ces pistons sont adaptés pour s'étendre de façon alternative à l'intérieur de l'alésage central 23. En pleine extension (figures 5 à 7), les pistons contactent la tige d'un des rivets 14₁ ou 14₂, et le bloque ainsi en position par rapport à l'élément 22b.

L'actionnement des pistons 25, 26 est commandé par une vanne 5/2. Ainsi (figure 5), le piston 25 (le plus en aval dans l'élément 22b) retient la pièce 14₁ au niveau de sa tête et la bloque en position. Toutes les autres pièces 14₂ à 14ₙ sont de ce fait également maintenues en position bien que le piston 26 (le plus en amont dans l'élément 22b) soit rétracté.

Une certaine pression règne à l'intérieur de l'alésage central 23. Cette pression est adaptée pour s'exercer sur la première pièce 14₁ de telle sorte que cette pièce aurait tendance à sortir de l'élément 22b si elle n'était pas retenue par le vérin 25.

Lors de l'envoi de la pièce 14₁ vers le moyen élastique, le vérin aval 25 se rétracte et libère la pièce 14₁ tandis que le vérin amont 26 se déploit et entre en contact avec la tige du rivet 14₂. Le rivet 14₂, et les suivants, sont ainsi maintenus en position (figure 6). Dès que le rivet 14₁ est sorti de l'élément 22b (figure 7), on actionne de nouveau la paire de vérins pour déployer le vérin aval 25 et rétracter le vérin amont 26. On se retrouve alors dans la même position qu'à la figure 5, mais avec le rivet 14₂ bloqué en première position.

Grâce à un tel mécanisme de retenue, il est ainsi possible de commander le départ, un par un, des rivets stockés dans le dispositif de stockage 20.

On notera que les vérins 25 et 26 reculent dans l'élément de retenue 22b sous l'action d'air comprimé et avancent dans l'alésage 23 grâce à deux ressorts (non détaillés). De ce fait, s'il y a un quelconque blocage au niveau du circuit d'air comprimé, les ressorts bloquent les vérins en position avancée (à l'intérieur de l'alésage), ce qui bloque l'ensemble des pièces 14 et évite de détériorer la machine à riveter. Ceci constitue une sécurité accrue lors de l'emploi de ce dispositif de stockage.

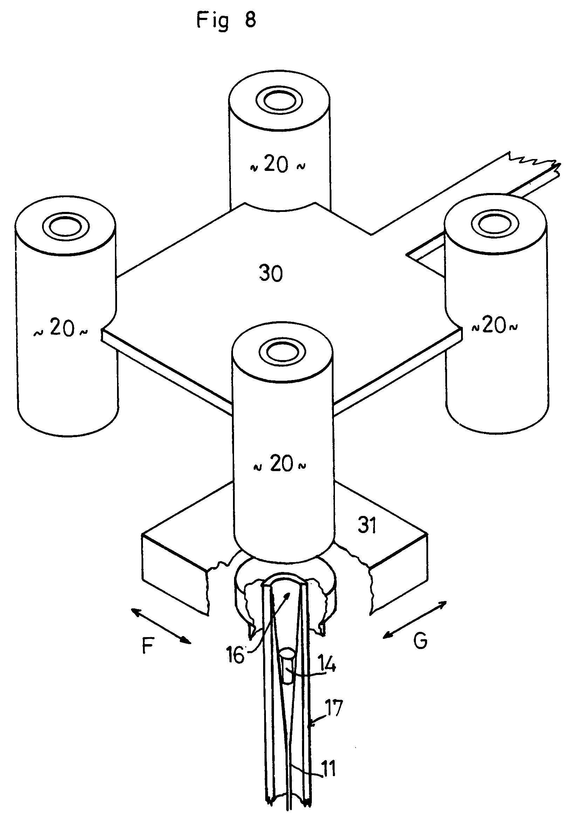

Lorsque plusieurs dispositifs de stockage 20 sont associés (figure 8), par exemple par un bâti 30, le dispositif de distribution selon l'invention comporte :
- la pluralité de dispositifs de stockage 20,
- un moyen de sélection 31 et,
- le moyen élastique 11 dans son élément tubulaire 17.

Le moyen de sélection 31 est un simple plateau déplaçable selon deux directions orthogonales (flèches F et G), afin de permettre la mise en coïncidence de l'ouverture 16 du moyen élastique 11 porté par le moyen de sélection 31, avec l'orifice de sortie (non visible à la figure 8) de l'un quelconque des dispositifs de stockage 20.

Dans l'exemple représenté, le moyen de sélection 31 est associé à quatre dispositifs de stockage, mais de manière évidente le nombre de dispositifs de stockage peut être plus important ou moindre.

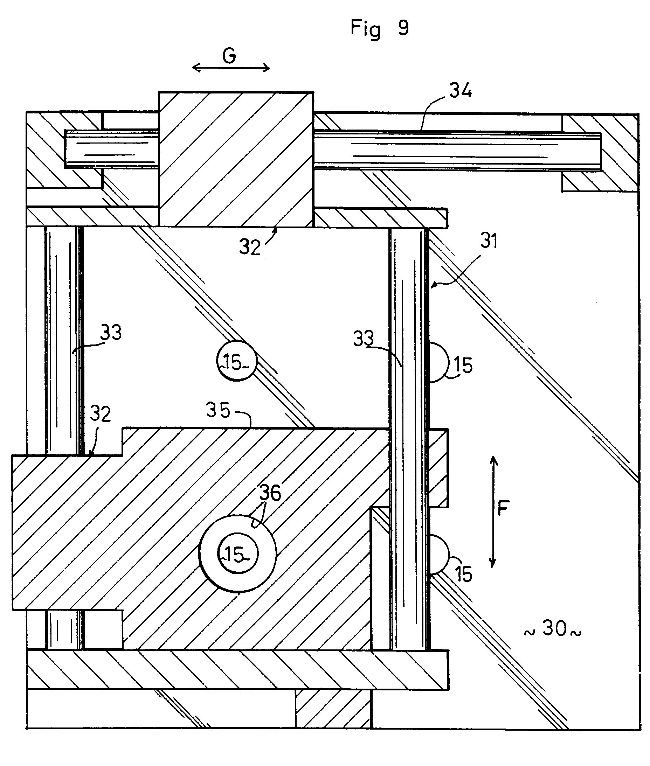

Comme cela est nettement visible à la figure 9, le moyen de sélection 31 comporte deux coulisseaux 32 pouvant glisser le long de deux guides 33 et 34 orthogonaux l'un par rapport à l'autre.

Ainsi, le corps 35 du moyen de sélection, muni d'un orifice 36 adapté pour recevoir le moyen élastique 11 (non représenté) est adapté pour venir en coïncidence (par déplacement selon les flèches F et G) avec l'un des orifices de sortie 15, des dispositifs de stockage.

En variante, et tel que représenté selon le détail D de la figure 4, l'emboîtement du dispositif de stockage 20 dans le moyen élastique 11 est facilité par la réalisation de créneaux 40, ménagés à l'extrémité de chacun de ces éléments. Ces créneaux constituent un moyen de connexion rapide entre les divers éléments à raccorder et permettent avantageusement d'assurer le centrage des différents alésages internes, de manière à créer un conduit continu sans discontinuités de surfaces pour les pièces 14.

Bien entendu, la présente invention n'est pas limitée aux modes de réalisation ci-dessus décrits et englobe toute variante à la portée de l'homme de l'art. Notamment de tels dispositifs de distribution ou de stockage de pièces peuvent être mis en oeuvre pour des pièces autres que des rivets, par exemple des vis, clous, agrafes, ..., etc.

## Revendications

1. Dispositif de distribution de pièces à l'unité, notamment de rivets (14), caractérisé en ce qu'il comporte :
- un moyen élastique (11) déformable présentant à l'état passif une forme sensiblement tubulaire comportant un alésage central (12) de section réduite, et des ouvertures d'introduction (16) et de sortie (15), ledit moyen élastique (11) étant adapté, à l'état actif pour s'expanser radialement afin de recevoir et guider dans son alésage central une pièce (14) et,
- une source de pression adaptée pour soumettre à une surpression l'alésage interne (12) du moyen élastique et provoquer une expansion radiale de celui-ci pour déplacer une par une chaque pièce (14) placée au niveau de l'orifice d'introduction (16) vers l'orifice de sortie (15) du moyen élastique (11).

2. Dispositif de distribution selon la revendication 1, caractérisé en ce que le moyen élastique (11) est une gaine plate extensible, à l'état passif.

3. Dispositif de distribution selon la revendication 1, caractérisé en ce que le moyen élastique (11) est placé à l'intérieur d'un élément tubulaire (17) présentant un alésage longitudinal (19).

4. Dispositif de distribution selon la revendication 3, caractérisé en ce que l'expansion radiale du moyen élastique (11) à l'état actif, est limitée par l'élément tubulaire (17).

5. Dispositif de distribution selon la revendication 3 ou 4, caractérisé en ce que l'orifice d'introduction (16) du moyen élastique (11) est solidaire de l'élément tubulaire (17) au niveau d'une extrémité (18) de celui-ci.

6. Dispositif de distribution selon la revendication 5, caractérisé en ce que la solidarisation entre le moyen élastique (11) et l'élément tubulaire (17) est réalisée par retournement et collage du moyen élastique (11) sur l'extrémité (18) de l'élément tubulaire (17).

7. Dispositif de distribution selon l'une des revendications 1 à 6, caractérisé en ce qu'il comporte, en outre, un dispositif de stockage (20) adapté pour contenir une pluralité de pièces (14₁, ..., 14ₙ) et pour les délivrer sur commande et à l'unité, au niveau de l'orifice d'introduction (16) du moyen élastique (11).

8. Dispositif de distribution selon la revendication 7, caractérisé en ce que le dispositif de stockage (20) comporte un élément tubulaire (22), un raccord (22a) et un élément de retenue (22b) présentant chacun un alésage central (23) adapté pour loger ladite pluralité de pièces (14₁, ..., 14ₙ) placées les unes derrière les autres, ledit dispositif de stockage (20) comportant, en outre, des moyens de retenue (24), adaptés pour retenir une première pièce (14₁) de la pluralité et pour la libérer sur commande.

9. Dispositif de distribution selon la revendication 8, caractérisé en ce que les moyens de retenue (24) sont constitués par un premier (25) et second (26) vérin faisant alternativement saillie à l'intérieur de l'alésage central, au niveau respectivement de la première pièce (14₁) et de la suivante (14₂).

10. Dispositif de distribution selon l'une des revendications 7 à 9, caractérisé en ce que dans le dispositif de stockage (20), la première pièce est soumise à une pression adaptée pour délivrer cette pièce vers le moyen élastique (11) lors d'une rétraction du premier vérin.

11. Dispositif de distribution selon l'une des revendications 7 à 10, caractérisé en ce que les moyens de retenue (24) comportent un moyen de commande des premier et second vérins (25, 26).

12. Dispositif de distribution selon la revendication 11, caractérisé en ce que le moyen de commande des premier et second vérins est une vanne 5/2.

13. Dispositif de distribution selon l'une des revendications 9 à 12, caractérisé en ce que les premier et second vérins sont disposés orthogonalement l'un par rapport à l'autre.

14. Dispositif de distribution selon l'une des revendications 1 à 13, caractérisé en ce qu'il comporte une pluralité de dispositifs de stockages (20) associés à un moyen de sélection (31) adapté pour transférer une première pièce (14₁) en attente dans un des dispositifs de stockage (20) vers l'orifice d'introduction (16) du moyen élastique (11).

15. Dispositif de distribution selon la revendication 14, caractérisé en ce qu'il comporte quatre dispositifs de stockage (20).

16. Dispositif de distribution selon la revendication 15, caractérisé en ce que le moyen de sélection (31) est un plateau (35) muni d'un orifice (16) déplaçable selon deux directions orthogonales (F, G), ledit plateau étant adapté pour amener cet orifice (16) en coïncidence avec l'orifice de sortie (15) de chaque dispositif de stockage (20).

17. Dispositif de distribution selon l'une des revendications précédentes, caractérisé en ce qu'il comporte un moyen de connexion (40) rapide entre les différents éléments tubulaires (22, 11) qui le constituent.

18. Dispositif de distribution selon la revendication 17, caractérisé en ce que le moyen de connexion rapide est une pluralité de créneaux (40) ménagés à chaque extrémité des éléments a raccorder (22, 17), en vue de leur emboîtement pour créer un alésage central sans discontinuités internes.

## Claims

1. Device for distributing parts singly, in particular rivets (14) characterized in that it comprises :
- a deformable elastic means (11) having in the passive state a substantially tubular form having a central bore (12) with a reduced cross section, and introduction openings (16) and outlet openings (15), the said elastic means (11) being adapted, in the active state to expand radially in order to receive and guide a part (14) in its central bore and,
- a source of pressure adapted so as to subject the internal bore (12) of the elastic means to an excess pressure and to cause radial expansion thereof in order to move each part (14) one by one placed in the region of the introduction orifice (16) towards the outlet orifice (15) of the elastic means (11).

2. Distribution device according to claim 1, characterized in that the elastic means (11) is an extensible flat sheath in the passive state.

3. Distribution device according to claim 1, characterized in that the elastic means (11) is placed inside a tubular element (17) having a longitudinal bore (19).

4. Distribution device according to claim 3, characterized in that the radial expansion of the elastic means (11) in the active state is limited by the tubular element (17).

5. Distribution device according to claim 3 or 4, characterized in that the introduction orifice (16) of the elastic means (11) is secured to the tubular element (17) in the region of one end (18) thereof.

6. Distribution device according to claim 5, characterized in that the elastic means (11) and the tubular element (17) are secured together by turning over and gluing the elastic means (11) onto the end (18) of the tubular element (17).

7. Distribution device according to one of claims 1 to 6, characterized in that it additionally includes a storage device (20) adapted to contain a plurality of parts (14₁, ...,14ₙ) and to deliver them on demand and singly, in the region of the introduction orifice (16) of the elastic means (11).

8. Distribution device according to claim 7, characterized in that the storage device (20) includes a tubular element (22), a connection (22a) and a retaining element (22b) each having a central bore (23) adapted so as to house the said plurality of parts (14₁, .... 14ₙ) placed one behind the other, the said storage device (20) having additionally retaining means (24), adapted to retain a first part (14₁) of the plurality and to liberate it on demand.

9. Distribution device according to claim 8, characterized in that the retaining means (24) consist of a first **jack** (25) and a second **jack** (26) projecting alternately inside the central bore, in the region of the first part (14₁) and of the following part (14₂) respectively.

10. Distribution device according to one of claims 7 to 9, characterized in that the first part is subjected in the storage device (20) to a pressure adapted so as to deliver this part to the elastic means (11), when the first **jack** is retracted.

11. Distribution device according to one of claims 7 to 10, characterized in that the retaining means (24) include means for controlling the first and second **jacks** (25, 26).

12. Distribution device according to claim 11, characterized in that the means for controlling the first and second **jacks** is a valve 5/2.

13. Distribution device according to one of claims 9 to 12, characterized in that the first and second **jacks** are disposed orthogonally in relation to each other.

14. Distribution device according to one of claims 1 to 13, characterized in that it includes a plurality of storage devices (20) associated with a means of selection (31) adapted so as to transfer a first part (14₁) waiting in one of the storage devices (20) towards the introduction orifice (16) of the elastic means (11).

15. Distribution device according to claim 14, characterized in that it includes four storage devices (20).

16. Distribution device according to claim 15, characterized in that the means of selection (31) is a plate (35) provided with an orifice (16) which can move in two orthogonal directions (F, G), the said plate being adapted so as to bring this orifice (16) in coincidence with the outlet orifice (15) of each storage device (20).

17. Distribution device according to one of the preceding claims, characterized in that it includes a rapid means of connection (40) between the different tubular elements (22, 11) which constitute it.

18. Distribution device according to claim 17, characterized in that the means of rapid connection is a plurality of notches (40) provided at each end of the components to be connected (22, 17), with a view to interlocking them in order to create a central bore without internal discontinuities.

## Patentansprüche

1. Vorrichtung zur Einzelförderung von Teilen, insbesondere von Nieten (14), dadurch gekennzeichnet, daß sie folgendes umfaßt:
- ein elastisches Mittel (11), das verformbar ist und im passiven Zustand eine im wesentlichen röhrenförmige Gestalt aufweist und das eine mittlere Bohrung (12) mit verringertem Querschnitt sowie Ein- (16) und Austrittsöffnungen (15) aufweist, wobei das genannte elastische Mittel (11) so ausgestaltet ist, daß es sich im aktiven Zustand radial ausdehnt, um in seiner mittleren Bohrung ein Teil (14) aufzunehmen und zu führen, und
- eine Druckquelle, um die Innenbohrung (12) des elastischen Mittels mit Überdruck zu beaufschlagen und um eine radiale Ausdehnung derselben zu bewirken, um die in der Höhe der Eintrittsöffnung (16) befindlichen Teile (14) nacheinander in Richtung auf die Austrittsöffnung (15) des elastischen Mittels (11) zu bringen.

2. Einzelförderungsvorrichtung nach Anspruch 1, dadurch gekennzeichnet, daß das elastische Mittel (11) im passiven Zustand eine flache dehnbare Hülse ist.

3. Einzelförderungsvorrichtung nach Anspruch 1, dadurch gekennzeichnet, daß sich das elastische Mittel (11) im Inneren eines röhrenförmigen Elementes (17) befindet, das eine Längsbohrung (19) aufweist.

4. Einzelförderungsvorrichtung nach Anspruch 3, dadurch gekennzeichnet, daß die radiale Ausdehnung des elastischen Mittels (11) im aktiven Zustand durch das röhrenförmige Element (17) begrenzt wird.

5. Einzelförderungsvorrichtung nach Anspruch 3 oder 4, dadurch gekennzeichnet, daß die Eintrittsöffnung (16) des elastischen Mittels (11) einstückig mit dem röhrenförmigen Element (17) in der Höhe eines Endes (18) davon ausgebildet ist.

6. Einzelförderungsvorrichtung nach Anspruch 5, dadurch gekennzeichnet, daß die einstückige Ausgestaltung zwischen dem elastischen Mittel (11) und dem röhrenförmigen Element (17) durch Drehen und Kleben des elastischen Mittels (11) auf das Ende (18) des röhrenförmigen Elementes (17) erfolgt.

7. Einzelförderungsvorrichtung nach einem der Ansprüche 1 bis 6, dadurch gekennzeichnet, daß sie ferner eine Vorratsvorrichtung (20) in der Höhe der Eintrittsöffnung (16) des elastischen Mittels (11) beinhaltet, um eine Mehrzahl von Teilen (14₁, ..., 14ₙ) aufzunehmen und bei Bedarf einzeln zu fördern.

8. Einzelförderungsvorrichtung nach Anspruch 7, dadurch gekennzeichnet, daß die Vorratsvorrichtung (20) ein röhrenförmiges Element (22), ein Zwischenstück (22a) und ein Halteelement (22b) aufweist, die jeweils eine mittlere Bohrung (23) aufweisen, die so ausgestaltet ist, daß sie die genannte Mehrzahl von Teilen (14₁, ..., 14ₙ) hintereinander angeordnet aufnehmen, wobei die genannte Vorratsvorrichtung (20) außerdem Haltemittel (24) aufweist, die so ausgestaltet sind, daß sie ein erstes Teil (14₁) der Mehrzahl halten und es bei Bedarf freigeben.

9. Einzelförderungsvorrichtung nach Anspruch 8, dadurch gekennzeichnet, daß die Haltemittel (24) durch einen ersten (25) und einen zweiten (26) Zylinder gebildet werden, die abwechselnd jeweils in der Höhe des ersten Teils (14₁) und des folgenden Teils (14₂) in das Innere der mittleren Bohrung vorstehen.

10. Einzelförderungsvorrichtung nach einem der Ansprüche 7 bis 9, dadurch gekennzeichnet, daß in der Vorratsvorrichtung (20) das erste Teil mit einem Druck beaufschlagt wird, der die Aufgabe hat, dieses Teil beim Zurückziehen des ersten Zylinders in Richtung auf das elastische Mittel (11) auszugeben.

11. Einzelförderungsvorrichtung nach einem der Ansprüche 7 bis 10, dadurch gekennzeichnet, daß die Haltemittel (24) ein Mittel zum Steuern des ersten und des zweiten Zylinders (25, 26) aufweisen.

12. Einzelförderungsvorrichtung nach Anspruch 11, dadurch gekennzeichnet, daß das Mittel zum Steuern des ersten und des zweiten Zylinders ein 5/2-Ventil ist.

13. Einzelförderungsvorrichtung nach einem der Ansprüche 9 bis 12, dadurch gekennzeichnet, daß der erste und der zweite Zylinder orthogonal zueinander angeordnet sind.

14. Einzelförderungsvorrichtung nach einem der Ansprüche 1 bis 13, dadurch gekennzeichnet, daß sie eine Mehrzahl von Vorratsvorrichtungen (20) aufweist, die mit einem Auswahlmittel (31) verbunden sind, das die Aufgabe hat, ein erstes, in einer der Vorratsvorrichtungen (20) wartendes Teil (14₁) in Richtung auf die Eintrittsöffnung (16) des elastischen Mittels (11) zu übertragen.

15. Einzelförderungsvorrichtung nach Anspruch 14, dadurch gekennzeichnet, daß sie vier Vorratsvorrichtungen (20) aufweist.

16. Einzelförderungsvorrichtung nach Anspruch 15, dadurch gekennzeichnet, daß das Auswahlmittel (31) eine mit einer Öffnung (16) versehene Platte (35) ist, die in zwei orthogonalen Richtungen (F, G) verschiebbar ist, wobei die genannte Platte so ausgestaltet ist, daß sie diese Öffnung (16) in Übereinstimmung mit der Austrittsöffnung (15) jeder Vorratsvorrichtung (20) führt.

17. Einzelförderungsvorrichtung nach einem der vorherigen Ansprüche, dadurch gekennzeichnet, daß sie ein Schnellverbindungsmittel (40) zwischen den verschiedenen röhrenförmigen Elementen (22, 11) aufweist, aus denen sie sich zusammensetzt.

18. Einzelförderungsvorrichtung nach Anspruch 17, dadurch gekennzeichnet, daß das Schnellverbindungsmittel eine Mehrzahl von Aussparungen (40) ist, die in jedem Ende der Anschlußelemente (22, 17) zu dem Zweck vorgesehen sind, sie zu verschachteln, um eine mittlere Bohrung ohne innere Unterbrechungen zu erzeugen.
